(19) Europäisches Patentamt / European Patent Office / Office européen des brevets

(11) **EP 3 138 676 A1**

(12) **EUROPEAN PATENT APPLICATION**

(43) Date of publication:
08.03.2017 Bulletin 2017/10

(51) Int Cl.:
*B27K 3/20* (2006.01)  *B05D 3/10* (2006.01)
*B05D 7/06* (2006.01)  *B27K 3/22* (2006.01)
*B27K 3/32* (2006.01)  *B27K 3/34* (2006.01)
*B32B 15/10* (2006.01)  *B32B 21/14* (2006.01)
*B05D 5/08* (2006.01)  *D06M 13/252* (2006.01)
*D06M 13/50* (2006.01)  *D06M 13/513* (2006.01)
*D06M 13/517* (2006.01)  *D21H 21/16* (2006.01)
*C08J 9/36* (2006.01)

(21) Application number: 15183874.5

(22) Date of filing: 04.09.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ETH Zurich**
**8092 Zurich (CH)**

(72) Inventors:
• **BURGERT, Ingo**
  **8607 Seegräben (CH)**
• **CABANE, Etienne**
  **8004 Zürich (CH)**
• **GUO, Huizhang**
  **8046 Zürich (CH)**

(54) **MULTI-REPELLENT WOOD VENEER AND PAPER SURFACE COATING**

(57)     The invention relates to a method for treatment of cellulose-based material comprising a coupling step and a hydrophobization step. The coupling step comprises the provision of a coupling solution comprising titanium(IV) isopropoxide (TTIP) or a basic solution of zinc oxide and the immersion of the cellulose-based material into the coupling solution. The following hydrophobization step comprises the provision of a hydrophobization solution comprising a hydrophobic compound and the immersion of the cellulose-based material in the hydrophobization solution, yielding a hydrophobic cellulose-based material, followed by drying of the hydrophobic cellulose-based material. According to a second aspect of the invention a cellulose-based material is provided characterized by its omniphobic properties, a cellulose-TTIP hybrid layer and/or ZnO hybrid layer.

Fig. 1

EP 3 138 676 A1

## Description

Field of the invention

The present invention relates to a method for treatment of cellulose-based materials that provides cellulose-based material with a multi-repellent surface.

## Background of the invention

In 1997, Neinhuis and Barthlott successfully explained the origin of "lotus effect" in nature, in which the self-cleaning properties of the plant surface were attributed to the micro- and nanometer epicuticular wax crystalloids (Neinhuis, C. & Barthlott, W; Annals of Botany, 79, 667-677, 1997). After decades of research based on the principle of "lotus effect" to prepare superhydrophobic surfaces, nowadays, researchers are facing the following challenges:

- the coating is whitish because of the light scattering effect of the rough nanostructure, which impedes the natural appearance of the substrate;
- limited repellence to low surface tension liquids;
- failure upon mechanical damage, and lack of self-healing properties.

For the preparation of superoleophobic surfaces, methods such as photolithography have been applied; however, they are cost intensive and not applicable to large scale applications. Alternatively, formulations comprising copolymers with specific properties can be prepared and applied to paper, textiles, leathers and wood as hydrophobic and oleophobic coating and finishing.

The addition of fluorinated acrylic monomers on the polymeric structure of wood coatings was reported, and it resulted in high hydrophobicity and oleophobicity of the coatings applied to wood panels (Bongiovanni, R. et al. Pitture Vernici, Eur. Coat. 79, 25-30; 2003).

WO 2008/055369 A1 disclosed a method to produce a hydrophobic or oleophobic finishing for coatings on all types of fibers or fabrics by dispersing particles comprising hydrophobic or oleophobic surface groups. Hydrophobic, oleophobic, and anti-icing coatings comprising a binder, particles with different size distribution and selected alkyl, haloalkyl or perfluoroalkyl chains were described in WO 2010/042191 A1.

However, these methods changed the natural appearance of the substrate materials and contained additional fungicide, acetone or petroleum, which are potentially harmful to humans and the environment.

In 2011, inspired by *Nepenthes,* pitcher plants, the research group headed by Aizenberg created omniphobic "slippery" surfaces (SLIPS) from low surface energy porous micro-structured solid substrates, such as Teflon membranes or arrays of nanoposts functionalized with polyfluoroalkylsilanes, by infusing them with a fluorinated lubricant (Wong, T.-S. et al. Nature; 477, 443-447; 2011). Three factors were identified as crucial for the preparation of omniphobic coatings:

- firstly, the lubricating liquid must have strong adhesion with the substrate;
- secondly, the material should be preferentially wetted by the lubricating liquid instead of the liquid to be repelled;
- thirdly, the lubricating and impinging test liquids must be immiscible.

Based on these principles, Aizenberg and co-workers have prepared SLIPS-based antibiofilm surfaces which were stable under water, at extreme pH and salinity, or harsh UV conditions, as well as SLIPS-coated Aluminium surfaces with extreme anti-ice and anti-frost performance. They also pre-assembled colloids at the air/water interface and subsequently transferred them onto the desired substrates to form colloidal templating lubricant-infused structured surfaces.

Similar principles were used to design SLIPS functionalized cotton and polyester fabrics exhibiting decreased contact angle hysteresis and sliding angles, and omni-repellent properties against various fluids including polar and non-polar liquids (Cicely et al., Nanotechnology; 25, 2014). More recently "fluoroalkylated paper" that resisted wetting by low surface tension liquids ($<15$ mN $m^{-1}$) by infusing the fluoroalkylated paper with perfluorinated oils has been reported (Glavan et al.; Adv. Funct. Mater. 24, 60-70, 2014), (WO 2014149465 A1).

In addition, WO 2014/012078 A2 disclosed a liquid repellent surface having selective wetting and transport properties, which comprise a liquid infused porous surface layer with patterned wettability. A multi-repellent material that included a reentrant curvature featured substrate and an immobilized layer of lubricating liquid wetting over the surface was described in WO 2014/012039 A1.

Terms and definitions

In the context of the present specification, the term *cellulose-based material* refers to any material comprising cellulose and/or hemicellulose as an essential part. Examples for cellulose-based materials include wood, paper, cotton, nanocellulose paper and nanocellulose foam. About 35 to 50 wt. % of wood is cellulose and about 20 to 35 wt. % is hemicellulose. Paper contains about 70 to 90 wt. % cellulose and 5 to 15 wt. % hemicellulose. Cotton contains about 85 to 95 wt. % cellulose and 3 to 5 wt. % hemicellulose. Nanocellulose paper and foam contain 100 wt.% cellulose.

In the context of the present specification the term *percentage by weight (wt%)* refers to the ratio of the mass of one substance to the mass of the total mixture multiplied by 100. Percentage by weight is calculated according to formula:

$$wt\% = \left(\frac{m_s}{m_{tot}}\right) \times 100$$

with $m_s$ being the mass of one substance in a mixture and $m_{tot}$ the mass of the total mixture.

In the context of the present specification, the term *multi-repellent surface* refers to a surface that is hydrophobic and oleophobic. These surfaces have a resistance to wetting by polar and non-polar liquids including low surface tension liquids. The terms *multi-repellent surface* and *omniphobic surfaces* are used interchangeably in this description.

Summary of the invention

The present invention was made in view of the prior art described above, and the problem underlying the present invention is to provide a method for treatment of cellulose-based materials that yields cellulose based-material with a multi-repellent surface. This problem is solved by the subject-matter of the independent claims.

The present invention provides a titanium isopropylate (TTIP) layer that penetrates into the cellulose-based material when it is immersed in TTIP solution to form a cellulose-TTIP hybrid layer. In an alternative approach, a ZnO layer penetrates the cellulose-based material by dipping it into the ZnO dissolved ammonia hydroxide solution followed by heat treatment. In both of these approaches, the present invention takes advantage of the coordination effect of TTIP or $Zn[(OH)_x(NH_3)_y]^{2-x}$ complexes, such as $Zn(NH_3)_4^{2+}$, to OH or CO groups in cellulose and hemicellulose to form hybrid surfaces. Then, surface hydrophobization is carried out by modifying the as-prepared cellulose-based material with low-surface-energy materials. The low-surface-energy materials could be long alkyl chain thiols, organic silanes, fatty acids, aromatic azide or fluorinated organic silane molecules. Finally, the multi-repellent properties and the resistance to wetting by low surface tension liquids of the hydrophobic surfaces were further increased by infusing them with perfluorinated oils.

The invention disclosed here yields cellulose-based materials with a multi-repellent surface, wherein the surface coating is mechanically robust, self-healing and transparent, which will broaden the practical application of such products. This facile method can be used to modify any temperature sensitive- and non-conducting cellulose-based material.

According to a first aspect of the invention a method for treatment of cellulose-based material is provided comprising the following steps:

a) A coupling step comprising:

i. The provision of a coupling solution comprising titanium(IV) isopropoxide (TTIP; CAS No: 546-68-9) and alcohol or a basic solution of zinc oxide, and
ii. the immersion of the cellulose-based material into the coupling solution, yielding a coupled cellulose-based material.

b) A hydrophobization step comprising:

i. The provision of a hydrophobization solution comprising a hydrophobic compound,
ii. the immersion of the coupled cellulose-based material in the hydrophobization solution, yielding a hydrophobic cellulose-based material, and
iii. drying of the hydrophobic cellulose-based material.

Detailed description of the invention

Wood is a versatile, strong and sustainable raw material. But its non-inert nature with a low dimensional stability and durability arising from water or moisture uptake strongly affects the reliability of wood in various applications. Moreover, the wood surface colour can be irreversibly changed by the uptake of liquids (e.g. red wine, oil, suncream). If a liquid repellent surface with low liquid-solid adhesion can be achieved, it should be possible to develop more inert wood materials for wider practical applications. The gist of this invention is to form a multi-repellent surface that repels polar liquids as well as low surface tension non polar liquids, that prevents the adsorption of liquid-borne contaminants and that reduces ice adhesion strength.

The novelty of this invention is that the coating is transparent, which is advantageous in preserving the natural appearance of wood materials, but is also desirable in processed cellulose-based goods such as paper or cotton fibres. The modified wood veneer retains its mechanical flexibility, and can be bent without destroying its omniphobic surface properties. The liquid repellent property of the coating stays intact even after cuts into the material, which indicates that the coating is self-healing and mechanically robust. The facile method can be further extended to modify any temperature sensitive- and non-conducting cellulose-based material, because of similar chemical functional groups.

According to the three criteria for designing the SLIPS proposed by Aizenberg, as explained above, the technical problem in creating an omniphobic surface of cellulose-based materials is that the surface is highly hydrophilic, consisting of a multitude of OH groups. This means that the chemical condition of the unmodified cellulose-based substrate is not suitable to immobilize perfluorinated oil films. In this invention, an inorganic coating was developed that acts as buffer layer, by the coordination effect of TTIP or $Zn[(OH)_x(NH_3)_y]^{2-x}$, particular $Zn(NH_3)_4^{2+}$, to OH and CO groups in cellulose and hemicellulose. Then, fluorosilanization was carried out to obtain a hydrophobic surface which has a chemical affinity for complete wetting and strong adhesion of lubricating fluid.

Common technologies used to achieve a porous surface with chemical affinity for liquids, facilitate a complete wetting by, and adhesion of, the lubricating fluid based on colloidal templating, chemical etching, roughening of the surface by nano/micro fibers or photolithography. However, these methods can hardly be applied to the rough and inhomogeneous wood surface and they are too cost intensive for large scale applications. In certain embodiments this invention takes advantage of the natural roughness (uneven topography with cut-open cells) and the chemical composition of wood to immobilize lubricant films onto wood veneers to form a multi-repellent wood surface.

The first aspect of the invention relates to a method for treatment of cellulose-based material comprising a coupling step and a hydrophobization step that are performed in this sequential order.

In the coupling step a coupling solution comprising titanium(IV) isopropoxide (TTIP) or a basic solution of zinc oxide is provided and the cellulose-based material is immersed in the coupling solution, yielding a coupled cellulose-based material.

This step creates a hybrid surface of the inorganic layer and the cellulose-based material by using the coordination effect of the inorganic coating with the OH and CO groups in cellulose and hemicellulose. The inorganic coating acts as a buffer layer between the cellulose-based material and the hydrophobic surface.

In the hydrophobization step a hydrophobization solution comprising a hydrophobic compound is provided and the coupled cellulose-based material is immersed in the hydrophobization solution yielding a hydrophobic cellulose-based material followed by drying of the hydrophobic cellulose-based material.

This step introduces hydrophobic compounds to the surface, which has a chemical affinity for complete wetting and strong adhesion of the lubricating fluid.

In certain embodiments, the coupling solution comprises TTIP with a concentration from 1 wt% to 10 wt%, in particular 2 wt% to 8wt%, more particular 4 wt% to 6 wt%.

In certain embodiments, the coupling solution comprises zinc oxide with a concentration of a saturated zinc oxide solution, in particular a ZnO concentration of 40mM to 60mM, more particular 45mM to 55mM, most particular 50mM.

In certain embodiments, the coupling solution comprises ammonium hydroxide in the case of the coupling solution comprising ZnO.

In certain embodiments, the coupling solution comprises ZnO, ammonium hydroxide and water.

In certain embodiments, in the case of the coupling solution comprising ZnO, the coupling solution has a pH > 7, in particular pH 8-14, more particular pH 9-13, most particular pH 11-12.

In certain embodiments, in the case of the coupling solution comprising TTIP the coupling solution comprises an organic solvent, in particular an alcohol, more particular ethanol, methanol or isopropanol.

In certain embodiments, wherein the immersion time in the coupling step is between 10 minutes and 2 hours, in particular 30 minutes and 2 hours, more particular 1 hour and 1.5 hours.

In certain embodiments, the coupling step further comprises a heat treatment step at 40°C to 110°C, in particular 60°C to 110°C, more particular 80°C to 110°C and most particular 90°C to 100°C, for a duration of 30 seconds to 5 minutes, in particular 1 minute to 4 minutes, more particular 2 minutes to 3 minutes.

In certain embodiments, the heat treatment step in the coupling step is followed by a washing step in ethanol.

In certain embodiments, the hydrophobization solution comprises an organic solvent, selected from nonpolar solvents, such as hexane, or polar solvents such as ethanol and methanol.

In certain embodiments, the hydrophobization solution comprises a hydrophobic compound selected from long alkyl chain thiols, organic silanes, fatty acids, aromatic azide or fluorinated organic silane molecules.

In certain embodiments, the hydrophobic compound in the hydrophobization solution is selected from:

- 1H,1H,2H,2H-Perfluorooctyltriethoxysilane (CAS: 51851-37-7);
- Trichloro (1H,1H,2H,2H-perfluorooctyl) silane (CAS: 78560-45-9),
- methyltrichlorosilane ($CH_3SiCl_3$; CAS: 75-79-6),
- decyltrichlorosilane ($CH_3(CH_2)_9SiCl_3$, CAS:13829-21-5),
- (3,3,4,4,5,5,6,6,7,7,8,8,8-tridecafluorooctyl) trichlorosilane ($CF_3(CF_2)_5CH_2CH_2SiCl_3$, CAS: 17527-29-6),
- stearic acid (CAS: 57-11-4),
- 1-Dodecanethiol (CAS: 112-55-0), and
- Trimethoxy(octyl)silane (CAS: 3069-40-7).

In certain embodiments, the immersion time in the surface hydrophobization step ranges from 0.5 hours to 24 hours, in particular 1 hour to 16 hours, more particular 2 hours to 12 hours, most particular 4 hours to 8 hours

In certain embodiments, the hydrophobic cellulose-based material is dried at a temperature of 40°C to 80°C, in particular 50°C to 80°C, more particular 60°C to 75°C.

In certain embodiments, the duration of drying may be prolonged depending on the size of the wood material. A non-limiting example is wood material of the dimensions radial (R) x tangential (T) x longitudinal (L) dimensions: 5x25x40 mm requiring a heat treatment of at least 5 minutes at 60°C, preferably 60°C for 2 hours. Wood material of smaller or larger dimension might require proportionally shorter or longer, respectively and/or lower temperatures. In general requires wood material of larger dimensions longer drying duration than wood material of smaller dimensions.

In certain embodiments, the method for treatment of cellulose based-material additionally comprises an omniphobization step. In this step a lubrication solution is provided and the hydrophobic cellulose-based material is immersed in the lubrication solution and excess lubrication solution is removed, yielding an omniphobic cellulose-based material.

This step adds a layer of lubricant to the surface that is essential for the self-healing properties of the surface.

In certain embodiments, the lubrication solution comprises a non-polar viscous liquid with a surface tension < 40 mN/cm, in particular with a surface tension of 10 to 35 mN/cm, more particular 15 to 25 mN/cm, most particular 16 to 20 mN/cm.

In certain embodiments, the non-polar viscous liquid is an oil.

In certain embodiments, the lubrication solution comprises fluorinated oils with a surface tension <40 mN/cm, in particular with a surface tension of 10 to 35 mN/cm, more particular 15 to 25 mN/cm, most particular 16 to 20 mN/cm.

In certain embodiments, the lubrication solution comprises fluorinated oils selected from DuPont Krytox GPL 100, 101, 102, 103, 104, 105, 106, 107, or any other oil with lower surface tension than the liquid to be repelled, such as crude oil or olive oil.

In certain embodiments, the immersion time in the lubrication solution ranges from 5 to 30 minutes, in particular 10 to 20 minutes, more particular 15 minutes

In certain embodiments, the removal of excess lubrication solution is achieved by removal of said cellulose-based-material from the lubrication solution and storage for a time of 10 minutes to 2 hours, in particular 30 minutes to 1.5 hours, more particular 1 hour.

In certain embodiments, the cellulose-based material is selected from wood, wood veneer, paper or cotton, nanocellulose paper and nanocellulose foam.

According to a second aspect of the invention a cellulose-based material characterized by at least one of the following properties:

I. The advancing contact angles of water are at least 110°, in particular at least 120°, more particular at least 130° and the receding contact angles are at least 70°, in particular at least 80°, more particular at least 87°, and/or

II. the advancing contact angles for a liquid with a surface tension between 45 mN/s and 50 mN/s are at least 75°, in particular at least 80°, more particular at least 89° and the receding contact angles are at least 55° in particular at least 60°, more particular at least 62°, and/or

III. the advancing contact angles for a liquid with a surface tension between 25 mN/s and 30 mN/s are at least 50°, in particular at least 55° more particular at least 60° and the receding contact angles are at least 35°, in particular 40°, more particular 41°, and/or

IV. a cellulose-TTIP hybrid layer, wherein TTIP derived from the coupling solution interacts with the OH and/or CO groups of cellulose and/or hemicellulose; and/or

V. a cellulose-ZnO hybrid layer, wherein ZnO derived from the coupling solution interacts with the OH and/or CO groups of cellulose and/or hemicellulose.

Properties I. to III. refer to the omniphobic properties against high surface tension and low surface tension liquids of the wood material.

In some embodiments the contact angle of a water drop on the surface of the wood material is measured. The term contact angle refers to the angle formed by the intersection of the liquid-solid interface and the liquid-vapor interface. In case the liquid used is water a contact angle smaller than 90° indicates a hydrophilic surface, a contact angle between 90° and 150° indicates a hydrophobic surface and contact angles above 150° indicate a superhydrophobic surface. In other words the higher the contact angle between a solid surface and a water droplet is the less hydrophilic and the more hydrophobic the solid surface is. A more adequate characterization of the wettability properties of surface can be obtained by measuring dynamic contact angles. The contact angle measured by expanding the liquid is referred to as the advancing contact angle and the contact angle formed by contracting the liquid is referred to as the receding contact angle. Subtraction of the receding contact angle from the advancing contact angle yields the contact angle hysteresis. Known methods to measure contact angle include direct measurement by goniometers.

According to a third aspect of the invention a cellulose-based material comprising the features according to the second aspect of the invention, obtainable by a process according to the method of the first aspect of the invention is provided.

Wherever alternatives for single separable features such as, for example, a treatment duration or temperature, a solution component or immersion duration are laid out herein as "embodiments", it is to be understood that such alternatives may be combined freely to form discrete embodiments of the invention disclosed herein.

The invention is further illustrated by the following examples and figures, from which further embodiments and advantages can be drawn. These examples are meant to illustrate the invention but not to limit its scope.

Short description of the figures

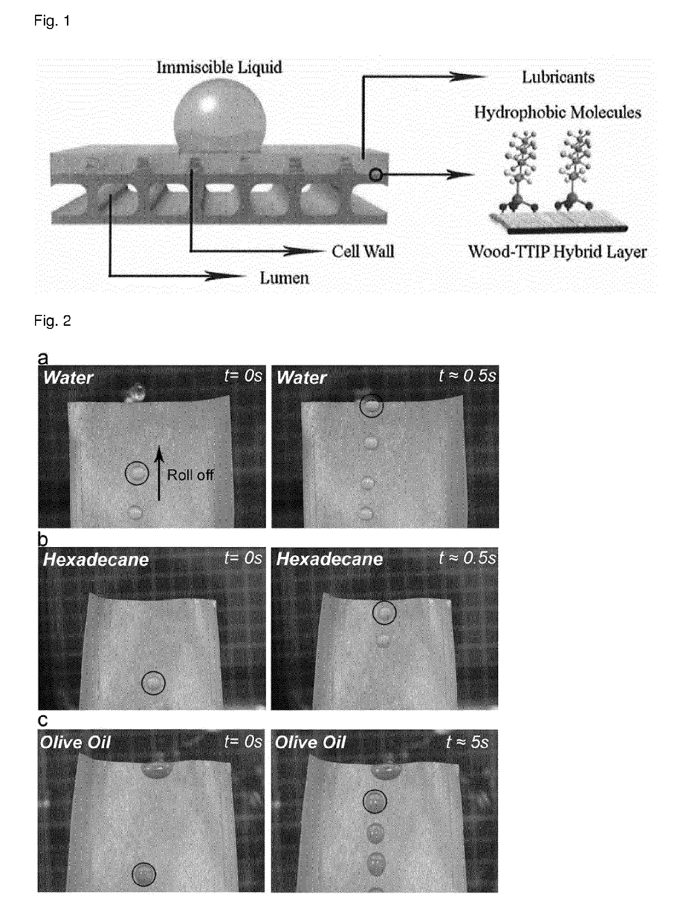

Fig. 1    shows a schematic illustration of the structure of the omniphobic coating on a wood surface

Fig. 2    shows time-sequence images of a drop of water (a), hexadecane (b) and olive oil (c) rolling down from the Krytox 100 infused spruce veneer after modification with TTIP and 1H,1H,2H,2H-Perfluorooctyltriethoxysilane. The tilt angle is about 15°. It reveals that the as-prepared wood veneer not only repels high surface tension water but also low surface tension organic solvent

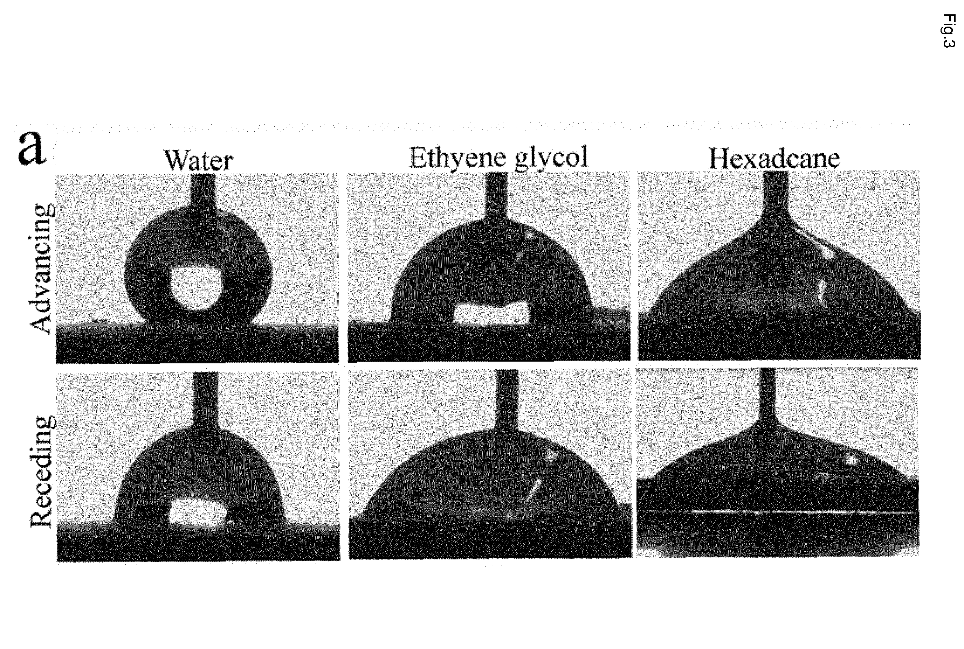

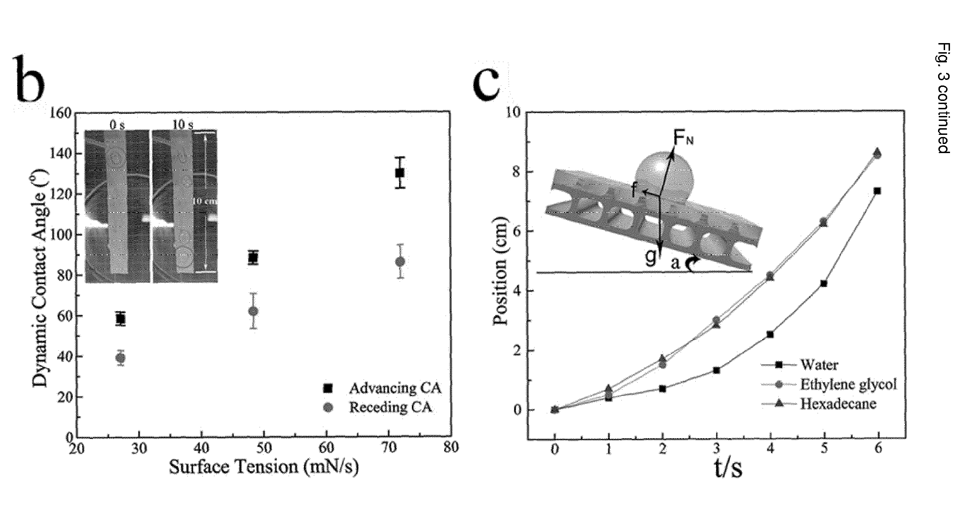

Fig.3    Snapshots from the measurement of advancing and receding contact angles of water, ethylene glycol and hexadcane droplets on the ZnO nanorods arrays modified wood surface after infused with lubricant (a). advancing (■) and receding (●) contact angle as well as contact angle hysteresis of water, ethane glycol and hexadecane on the lubricant infused hierarchical wood surface as a function of the surface tension of the tested liquid. (b) The inset displays the rolling off of a droplet of olive oil which is highlighted in red cycles. The rolling off distance of a droplet of water (■), ethylene glycol (●) and hexadecane (▲) from the lubricant infused hierarchical wood surface with a title angle of about 16.8 degree as a function of time. The quality of water, ethane glycol and hexadecane droplet is 27.9, 42.8 and 17.2 mg, respectively (c). Compared to water and ethane glycol, the hexadecane droplet has the smallest receding and advancing contact angles, as well as the smallest contact angle hysteresis (~19.22°). It is different from the conventionally known Cassie-Baxter type nonwetting surface. The rolling off speed increased as the contact angle hysteresis decreased. In spite of that the water droplet has the largest contact angle, it displayed the lowest rolling off speed.

Examples

The process of wood surface modification according to the invention comprises the following steps:

I) Wood-TTIP hybrid surface

1) Wood veneer was immersed in a titanium alkoxide [titanium(IV) isopropoxide (TTIP)] - ethanol solution for a certain period of time, in particular 2 hours at room temperature. The treated wood veneer was washed in fresh ethanol, and then a wood-TTIP hybrid surface was obtained. The concentration of TTIP in ethanol solution should range from 1 wt% to 10 wt%; the immersion time should range from 10 min to 2h.

II) ZnO layer covered wood surface

1) Excess ZnO powder was added to ammonium hydroxide solution to obtain a saturated ZnO dissolved solution with the assistance of magnetic stirring.

2) Dipping the wood veneer into the ZnO dissolved solution described in step 1) for a certain period of time, in particular, 5 min at room temperature, before heat treatment Heat treatment temperature should be in the range of 40°C to 110 °C; the heat treatment time should be in the range of 30 seconds to 5 min.

III) Fluorosilanization

1) Immersing the wood veneer obtained from process I) or II) into the organic solvent containing hydrophobic compounds. The organic solvent could be hexane, ethanol or methanol, and the fluorinated organic silanes could be an hydrophobic compound selected from 1H,1H,2H,2H-Perfluorooctyltriethoxysilane (CAS: 51851-37-7); Trichloro (1H,1H,2H,2H-perfluorooctyl) silane (CAS: 78560-45-9), decyltrichlorosilane ($CH_3(CH_2)_9SiCl_3$, CAS: 13829-21-5), and (3,3,4,4,5,5,6,6,7,7,8,8,8-tridecafluorooctyl) trichlorosilane ($CF_3(CF_2)_5CH_2CH_2SiCl_3$, CAS: 17527-29-6) ; the immersing time could range from 0.5 h to 24 h; the fluorinated organic silanes dissolved in organic solvent could be also dropped onto the wood veneer surface, and then dried in air.

2) Removal of the wood veneer from the organic solution and drying in an oven. In this step, wood veneer can be dried at a temperature ranging from 40°C to 80°C.

IV) Lubrication
The fluoroalkylated wood veneer obtained in step III) is infused with lubricants by adding the lubricant liquid to the substrate followed by dipping into the lubricant liquid for 5 to 30 minutes followed by storage for half hour to remove the excess lubricants. The lubricants could be fluorinated oils such as DuPont Krytox GPL 100, 101, 102, 103, 104, 105, 106, 107..
V) The procedures demonstrated in Step I) to Step IV) can not only be used for wood surface modification but can also be applied to modify cellulose paper with the exact same method.

Compared with existing technologies, the advantages of this invention include the following points:

1) The wood surface covering process as described is facile, mild and economic. Almost all of the procedures can be finished in a short time at room temperature;
2) The modified wood surface can repel a wider variety of liquids compared to traditional superhydrophobic surfaces;

3) The coating is transparent, which preserves the natural appearance of wood after modification;

4) The coating is robust to mechanical damage as observed by a knife scratch test;

5) The presented method can be extended to prepare multi-repellent nanocellulose papers;

6) The presented method can be easily scaled-up for large scale surface modification;

**Claims**

1. A method for treatment of cellulose-based material comprising

    a) a coupling step comprising:

        i. provision of a coupling solution comprising titanium(IV) isopropoxide (TTIP) or a basic solution of zinc oxide,
        ii. immersion of said cellulose-based material into said coupling solution, yielding a coupled cellulose-based material,

    b) a hydrophobization step comprising:

        i. provision of a hydrophobization solution comprising a hydrophobic compound,
        ii. immersion of said coupled cellulose-based material in said hydrophobization solution, yielding a hydrophobic cellulose-based material,
        iii. drying of said hydrophobic cellulose-based material,

2. The method for treatment of cellulose-based material according to claim 1, wherein the coupling solution comprises

    • TTIP with a concentration from 1 wt% to 10 wt%, in particular 2 wt% to 8wt%, more particular 4 wt% to 6 wt%, and/or
    • zinc oxide with a concentration of a saturated zinc oxide solution, in particular a ZnO concentration of 40mM to 60mM, more particular 45mM to 55mM, most particular 50mM.

3. The method for treatment of cellulose-based material according to any one of the preceding claims, wherein the coupling solution comprises:

    - in the case of the coupling solution comprising ZnO, ammonium hydroxide, and/or
    - in the case of the coupling solution comprising TTIP, an organic solvent, in particular an alcohol, more particular ethanol.

4. The method for treatment of cellulose-based material according to any one of the preceding claims, wherein the immersion time in the coupling step is between 10 minutes and 2 hours, in particular 30 minutes and 2 hours, more particular 1 hour and 1.5 hours.

5. The method for treatment of cellulose-based material according to any one of the preceding claims, wherein the coupling step further comprises a heat treatment step at 40°C to 110°C, in particular 60°C to 110°C, more particular 80°C to 110°C and most particular 90°C to 100°C, for a duration of 30 seconds to 5 minutes, in particular 1 minute to 4 minutes, more particular 2 minutes to 3 minutes.

6. The method for treatment of cellulose-based material according to any one of the preceding claims, wherein the hydrophobization solution comprises a hydrophobic compound selected from:

    - long alkyl chain thiols,
    - organic silanes,
    - fatty acids,
    - aromatic azide and
    - fluorinated organic silane molecules.

7. The method for treatment of cellulose-based material according to any one of the preceding claims, wherein the hydrophobic compound in the hydrophobization solution is selected from:

    - 1 H, 1 H,2H,2H-Perfluorooctyltriethoxysilane;
    - Trichloro (1 H, 1 H,2H,2H-perfluorooctyl) silane,
    - methyltrichlorosilane,
    - decyltrichlorosilane,
    - (3,3,4,4,5,5,6,6,7,7,8,8,8-tridecafluorooctyl) trichlorosilane,
    - stearic acid,
    - 1-Dodecanethiol, and
    - Trimethoxy(octyl)silane.

8. The method for treatment of cellulose-based material according to any one of the preceding claims, wherein:

    - the immersion time in the surface hydrophobization step ranges from 0.5 hours to 24 hours, in particular 1 hour to 16 hours, more particular 2 hours to 12 hours, most particular 4 hours to 8 hours; and/or
    - the drying of said hydrophobic cellulose-based material is performed at a temperature of 40°C to 80°C, in particular 50°C to 80°C, more particular 60°C to 75°C.

9. The method for treatment of cellulose-based material according to any one of claim 1 to 8, additionally comprises an omniphobization step comprising:

i. provision of a lubrication solution,
ii. immersion of said hydrophobic cellulose-based material into said lubrication solution,
iii. removal of excess lubrication solution,
yielding an omniphobic cellulose-based material.

10. The method for treatment of cellulose-based material according to claim 9, wherein the lubrication solution comprises a non-polar viscous liquid with a surface tension <40 mN/cm, in particular with a surface tension of 10 to 35 mN/cm, more particular 15 to 25 mN/cm, most particular 16 to 20 mN/cm.

11. The method for treatment of cellulose-based material according to any one of claims 9 to 10, wherein the lubrication solution comprises:

i. fluorinated oils selected from DuPont Krytox GPL 100, 101, 102, 103, 104, 105, 106 and 107; and/or
ii. crude oil or olive oil.

12. The method for treatment of cellulose-based material according to any one of claims 9 to 11, wherein:

- the immersion time in the lubrication solution ranges from 5 to 30 minutes, in particular 10 to 20 minutes, more particular 15 minutes; and/or
- said removal of excess lubrication solution is achieved by removal of said cellulose-based-material from the lubrication solution and storage for a time of 10 minutes to 2 hours, in particular 30 minutes to 1.5 hours, more particular 1 hour.

13. The method for treatment of cellulose-based material according to any one of the preceding claims, wherein the cellulose-based material is selected from wood, wood veneer, paper, cotton, nanocellulose paper or nanocellulose foam.

14. A cellulose-based material **characterized by** at least one of the following properties:

I. the advancing contact angles of water are at least 110°, in particular at least 120°, more particular at least 130° and the receding contact angles are at least 70°, in particular at least 80°, more particular at least 87°, and/or
II. the advancing contact angles for a liquid with a surface tension between 45 mN/s and 50 mM/s are at least 75°, in particular at least 80°, more particular at least 89° and the receding contact angles are at least 55° in particular at least 60°, more particular at least 62°, and/or
III. the advancing contact angles for a liquid with a surface tension between 25 mN/s and 30 mM/s are at least 50°, in particular at least 55° more particular at least 60° and the receding contact angles are at least 35°, in particular 40°, more particular 41°, and/or
IV. a cellulose-TTIP hybrid layer, wherein TTIP derived from the coupling solution interacts with the OH and/or CO groups of cellulose and/or hemicellulose; and/or
V. a cellulose-ZnO hybrid layer, wherein ZnO derived from the coupling solution interacts with the OH and/or CO groups of cellulose and/or hemicellulose.

15. A cellulose-based material, particularly comprising the features of claim 14, obtainable by a process according to the method of any one of claims 1 to 13.

Fig. 1

Fig. 2

Fig.3

Fig. 3 continued

| | Europäisches Patentamt<br>European Patent Office<br>Office européen des brevets | **EUROPEAN SEARCH REPORT** | **Application Number**<br>EP 15 18 3874 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 945 834 A (CLARKE MICHAEL R ET AL) 23 March 1976 (1976-03-23) * column 3, lines 16-36; example 6 * * column 5, lines 30-50 *<br>----- | 1-15 | INV.<br>B27K3/20<br>B05D3/10<br>B05D7/06<br>B27K3/22 |
| X | US 2 750 303 A (LA BERGE ROBERT W) 12 June 1956 (1956-06-12) * column 7, line 57 - column 8, line 3; claims 1, 4, 6-7 *<br>----- | 1-15 | B27K3/32<br>B27K3/34<br>B32B15/10<br>B32B21/14<br>B05D5/08<br>D06M13/252<br>D06M13/50<br>D06M13/513<br>D06M13/517<br>D21H21/16<br>C08J9/36 |

| TECHNICAL FIELDS SEARCHED (IPC) |
|---|
| B27K<br>B05D<br>B32B<br>D06M<br>D21H<br>C08J |

The present search report has been drawn up for all claims

| Place of search | Date of completion of the search | Examiner |
|---|---|---|
| Munich | 11 February 2016 | Bjola, Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 18 3874

The Search Division considers that the present European patent application does not comply with the requirements of unity of invention and relates to several inventions or groups of inventions, namely:

1. claims: 1-15(partially)

    method for treating wood by applying subsequently TTIP and a hydrophobization solution

    ---

2. claims: 1-15(partially)

    method for treating wood by applying subsequently a ZnO composition and a hydrophobization solution

    ---

3. claims: 1-15(partially)

    method for treating paper by applying subsequently TTIP and a hydrophobization solution

    ---

4. claims: 1-15(partially)

    method for treating paper by applying subsequently a ZnO composition and a hydrophobization solution

    ---

5. claims: 1-15(partially)

    method for treating a cellulosic fiber by applying subsequently TTIP and a hydrophobization solution

    ---

6. claims: 1-15(partially)

    method for treating cellulosic fiber by applying subsequently a ZnO composition and a hydrophobization solution

    ---

7. claims: 1-15(partially)

    method for treating a foam by applying subsequently TTIP and a hydrophobization solution

    ---

8. claims: 1-15(partially)

    method for treating a foam by applying subsequently a ZnO composition and a hydrophobization solution

    ---

## ANNEX TO THE EUROPEAN SEARCH REPORT
## ON EUROPEAN PATENT APPLICATION NO.

EP 15 18 3874

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2016

| Patent document cited in search report | | Publication date | Patent family member(s) | | Publication date |
|---|---|---|---|---|---|
| US 3945834 | A | 23-03-1976 | CA | 1005757 A | 22-02-1977 |
| | | | US | 3945834 A | 23-03-1976 |
| US 2750303 | A | 12-06-1956 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008055369 A1
- WO 2010042191 A1
- WO 2014149465 A1
- WO 2014012078 A2
- WO 2014012039 A1

**Non-patent literature cited in the description**

- **NEINHUIS, C. ; BARTHLOTT, W.** Annals of Botany. 1997, vol. 79, 667-677
- **BONGIOVANNI, R. et al.** *Pitture Vernici, Eur. Coat.,* 2003, vol. 79, 25-30
- **WONG, T.-S. et al.** *Nature,* 2011, vol. 477, 443-447
- **CICELY et al.** *Nanotechnology,* 2014, 25
- **GLAVAN et al.** *Adv. Funct. Mater.,* 2014, vol. 24, 60-70